# EUROPÄISCHE PATENTANMELDUNG

(11) **EP 4 686 835 A1**
(43) Veröffentlichungstag der Anmeldung: **04.02.2026**
(21) Anmeldenummer: 25186497.1
(22) Anmeldetag: 01.07.2025
(51) Int. Cl.: F16B 5/02, F16B 25/00

(54) **SCHRAUBE, INSBESONDERE DISTANZSCHRAUBE**

(30) Priorität: 30.07.2024 DE 102024121681; 04.06.2025 DE 102025121905
(71) Anmelder: fischerwerke GmbH & Co. KG, 72178 Waldachtal (DE)
(72) Erfinder: Ganszki, Timo, 72178 Waldachtal (DE)
(74) Vertreter: Suchy, Ulrich Johannes

(57) **Zusammenfassung**

Die Erfindung betrifft eine Distanzschraube (1) mit einem Schraubenschaft (2) aus Stahl, der ein erstes Gewinde (6) in einem vorderen Längsbereich (5) und eine Kunststoffummantelung (3) mit einem zweiten Gewinde (10) in einem hinteren Längsbereich (4) aufweist. Für ein kleineres Einschraubmoment schlägt die Erfindung vor, einen zweiten Gewindekern (11) des zweiten Gewindes (10) als Sechskant auszubilden. Für ein einfacheres Einbringen weist die Kunststoffummantelung (3) einen Einführabschnitt (15) in Verlängerung des zweiten Gewindekerns (11) nach vorn auf, der erfindungsgemäß ebenfalls als Sechskant ausgebildet ist.

## Beschreibung

Die Erfindung betrifft eine Schraube, insbesondere eine Distanzschraube mit den Merkmalen des Oberbegriffs des Anspruchs 1.

Distanzschrauben dienen dazu, ein Bauteil, beispielsweise einen Fensterrahmen, in einem Abstand von einem tragenden Bauteil, beispielsweise in einer Fensterleibung eine Gebäudewand, zu befestigen. Distanzschrauben weisen ein erstes Gewinde, das in dem tragenden Bauteil verankert, beispielsweise in einen Spreizdübel in einem Bohrloch in dem tragenden Bauteil geschraubt wird, und ein zweites Gewinde in einem axialen Abstand von dem ersten Gewinde, das in das zu befestigende Bauteil geschraubt wird, auf.

Die Patentanmeldung EP 0 935 075 A1 offenbart eine Distanzschraube mit einem zylinderstiftförmigen Stahlschaft, der ein erstes Gewinde aufweist, das sich von einem Ende des Schafts über einen Längsbereich des Stahlschafts erstreckt. Ein Längsbereich an einem anderen Ende des Schafts ist mit einem Kunststoff umspritzt, der ein zweites Gewinde aufweist. Zwischen den beiden Gewinden ist der Schaft glattwandig, das heißt gewindelos, die beiden Gewinde weisen einen Abstand in einer Längsrichtung der Distanzschraube und des Stahlschafts voneinander auf.

Aufgabe der Erfindung ist, ein Einschraubmoment einer solchen Distanzschraube zu verkleinern.

Diese Aufgabe wird erfindungsgemäß durch die Merkmale des Anspruchs 1 gelöst. Die erfindungsgemäße Distanzschraube wird hier verallgemeinernd auch als Schraube bezeichnet, weil sie nicht auf die Verwendung als Distanzschraube eingeschränkt werden soll. Sie wird nachfolgend überwiegend nur als Distanzschraube bezeichnet, was auch im Sinne einer "Schraube" allgemein zu verstehen ist.

Die erfindungsgemäße Distanzschraube weist ein erstes Gewinde mit einem ersten Gewindekern und ein zweites Gewinde mit einem zweiten Gewindekern auf, wobei die beiden Gewinde insbesondere einen Abstand voneinander in axialer Richtung beziehungsweise in einer Längsrichtung der Distanzschraube aufweisen. Das erste Gewinde erstreckt sich über einen vorderen Längsbereich der Distanzschraube, der insbesondere an einem Ende der Distanzschraube beginnt, wobei dieses Ende hier als vorderes Ende der Distanzschraube bezeichnet wird. Das erste Gewinde kann allerdings auch einen - vorzugsweise kleinen - Abstand von dem vorderen Ende der Distanzschraube aufweisen. Das zweite Gewinde erstreckt sich über einen hinteren Längsbereich der Distanzschraube, der an einem, dem vorderen Ende fernen Ende der Distanzschraube beginnen kann, das hier als hinteres Ende der Distanzschraube bezeichnet wird. Vorzugsweise beginnt der hintere Längsbereich mit dem zweiten Gewinde in einem - vorzugsweise kleinen - Abstand von dem hinteren Ende der Distanzschraube. Als kleiner Abstand wird hier ein Abstand bezeichnet, der nicht größer als ein Radius, ein Durchmesser oder das 1,5-fache des Durchmessers des ersten oder zweiten Gewindekerns ist.

Erfindungsgemäß weist der zweite Gewindekern des zweiten Gewindes in dem hinteren Längsbereich der Distanzschraube einen Mehrkant auf, das heißt einen mehreckigen Querschnitt, wobei sich der Querschnitt in Form und/oder Größe über eine Länge des zweiten Gewindekerns ändern kann. Die Kanten des zweiten Gewindekerns können in Axialebenen der Distanzschraube, wendelförmig oder auch in sich über die Länge des zweiten Gewindekerns ändernden Winkeln zu Axialebenen der Distanzschraube verlaufen, beispielsweise auch wellenförmig oder zick-zack-förmig. Insbesondere weist der zweite Gewindekern einen regelmäßigen Mehreckquerschnitt auf, das heißt, seine Ecken weisen gleiche Abstände in einer Umfangsrichtung voneinander auf. Allerdings schließt die Erfindung einen unregelmäßigen Mehreckquerschnitt nicht aus. Verbindungslinien zwischen den Ecken des Mehreckquerschnitts sind insbesondere gerade, das heißt, der zweite Gewindekern weist die Form eines Mehrkants oder eines Pyramidenstumpfs auf. Die Verbindungslinien zwischen den Ecken des Mehreckquerschnitts des zweiten Gewindekerns können aber auch nicht gerade, sondern beispielsweise nach innen oder außen gebogen oder abgewinkelt sein.

Insbesondere weist der zweite Gewindekern einen regelmäßigen, sechseckigen- oder achteckigen Querschnitt auf, möglich sind beispielsweise auch ein viereckiger- oder dreieckiger Querschnitt oder ein Querschnitt mit fünf-, sieben- oder mehr als acht Ecken.

Aufgrund der Ausführung als Mehrkant mit mehreckigem Querschnitt, liegt der zweite Gewindekern des zweiten Gewindes im hinteren Längsbereich der erfindungsgemäßen Schraube beziehungsweise Distanzschraube nur mit seinen Kanten, das heißt mit den Ecken seines Querschnitts, an einer Lochwand eines zuvor gebohrten oder in anderer Weise erstellten Durchgangslochs in dem zu befestigenden Bauteil an, wenn der Durchmesser des Durchgangslochs nicht größer als ein, die Ecken des zweiten Gewindekerns berührender Umkreis ist. Dadurch ist eine Reibung zwischen dem zweiten Gewindekern beziehungsweise seinen Kanten und der Lochwand des Durchgangslochs im zu befestigenden Bauteil beim Einschrauben des zweiten Gewindes der Distanzschraube und damit ein Einschraubmoment kleiner als bei einem Gewinde mit einem zylindrischen Gewindekern beziehungsweise einem Gewindekern mit einem kreisförmigen Querschnitt, wenn der Durchmesser des Durchgangslochs im zu befestigenden Bauteil nicht größer als der Durchmesser des Gewindekerns ist.

Die abhängigen Ansprüche haben vorteilhafte Ausgestaltungen und Weiterbildungen der im Anspruch 1 angegebenen Erfindung zum Gegenstand.

Eine Ausgestaltung der Erfindung weist einen Schraubenschaft auf, der das erste Gewinde in einem vorderen Längsbereich des Schraubenschafts aufweist, der zugleich auch der vordere Längsbereich der Distanzschraube ist. In einem, dem vorderen Längsbereich fernen hinteren Längsbereich, der zugleich auch der hintere Längsbereich der Distanzschraube ist, weist der Schraubenschaft bei dieser Ausgestaltung der Erfindung eine Kunststoffummantelung auf, die das zweite Gewinde mit dem zweiten Gewindekern aufweist. Beispielsweise besteht der Schraubenschaft aus Stahl oder einem anderen Metall und ist in dem hinteren Längsbereich mit einem Kunststoff umspritzt, der die Form des zweiten Gewindes mit dem zweiten Gewindekern aufweist, wobei der Kunststoff die Kunststoffummantelung des Schraubenschafts bildet. Die Kunststoffummantelung kann am oder vor dem hinteren Ende des Schraubenschafts enden oder über das hintere Ende des Schraubenschafts überstehen. Diese Ausgestaltung der Erfindung ermöglicht eine einfache und preisgünstige Herstellung der erfindungsgemäßen Distanzschraube und weist durch die Kunststoffummantelung eine thermische Isolierung im hinteren Längsbereich auf, die thermisch zwischen dem Schraubenschaft der Distanzschraube und dem zu befestigenden Bauteil, in das das zweite Gewinde geschraubt ist, isoliert.

Eine bevorzugte Ausgestaltung der Erfindung sieht vor, dass der zweite Gewindekern als Einführabschnitt für das zweite Gewinde nach vorn in Richtung des vorderen Endes der Schraube beziehungsweise Distanzschraube über das zweite Gewinde übersteht und dass der Einführabschnitt ebenfalls die Form eines Mehrkants aufweist, das heißt einen mehreckigen Querschnitt. Insbesondere führt der Einführabschnitt den zweiten Gewindekern beziehungsweise dessen Querschnitt ein begrenztes Stück in der Längsrichtung der Distanzschraube nach vorn in Richtung des vorderen Endes der Distanzschraube fort. Der Einführabschnitt für das zweite Gewinde vor dem zweiten Gewinde führt und/oder zentriert das zweite Gewinde bei dem Einschrauben in das Durchgangsloch in dem zu befestigenden Bauteil.

Bei einer ebenfalls bevorzugten Ausgestaltung der Erfindung vergrößert sich der Mehreckquerschnitt des Einführabschnitts und/oder des zweiten Gewindekerns von vorn nach hinten, das heißt, aus Richtung des vorderen Endes in Richtung des hinteren Endes der Distanzschraube. Damit ist gemeint, dass sich ein radialer Abstand der Ecken des Mehreckquerschnitts des Einführabschnitts und/oder des zweiten Gewindekerns von einer Längsachse der Distanzschraube beziehungsweise von einer Längsachse des zweiten Gewindekerns von vorn nach hinten vergrößert. Anders ausgedrückt, vergrößert sich ein Umkreis des Mehreckquerschnitts von vorn nach hinten, wobei der "Umkreis" ein gedachter Kreis ist, der die Ecken des Mehreckquerschnitts berührt. Es verlaufen also die Kanten des Mehrkants des Einführabschnitts und/oder des zweiten Gewindekerns nicht parallel zur Längsachse der Distanzschraube beziehungsweise zur Längsachse des zweiten Gewindekerns, sondern in einem konstanten oder sich ändernden Winkel zu der Längsachse von vorn nach hinten schräg nach außen. Der Mehreckquerschnitt des Einführabschnitts und/oder des zweiten Gewindekerns muss sich nicht über eine gesamte Länge des hinteren Längsbereichs vergrößern, sondern es genügt, wenn sich der Mehreckquerschnitt in einem oder mehreren Abschnitten des hinteren Längsbereichs der Distanzschraube beziehungsweise Schraube vergrößert. Abschnitte mit sich von vorn nach hinten verkleinerndem Mehreckquerschnitt schließt diese Ausgestaltung der Erfindung nicht aus. Im Einführabschnitt vereinfacht der sich von vorn nach hinten vergrößernde Mehreckquerschnitt das Einführen in das Durchgangsloch in dem zu befestigenden Bauteil und am zweiten Gewindekern verringert der sich von vorn nach hinten vergrößernden Mehreckquerschnitt die Reibung und das zum Einschrauben notwendige Drehmoment.

Eine bevorzugte Ausgestaltung der Erfindung sieht eine Formschlussverbindung zwischen dem Schraubenschaft und der Kunststoffummantelung vor, die die Kunststoffummantelung durch einen Formschluss mit dem Schraubenschaft gegen ein Drehen auf dem Schraubenschaft hält. Dadurch ist eine drehfeste Verbindung zwischen dem Schraubenschaft und der Kunststoffummantelung in dem hinteren Längsbereich der Distanzschraube verbessert. Der Formschluss ist beispielsweise mittels Längsrippen am Schraubenschaft durch einen Mehreckquerschnitt, einen Sternquerschnitt oder einen Vielzahnquerschnitt des Schraubenschafts in der Kunststoffummantelung möglich. Die Aufzählung ist beispielhaft und nicht abschließend.

Das erste Gewinde und das zweite Gewinde können bei Ausführungen der erfindungsgemäßen Distanzschraube verschiedene und/oder einander entgegengerichtete (Rechts- und Linksgewinde) Gewindesteigungen aufweisen. Dadurch ändert sich ein Abstand des zu befestigenden Bauteils, in das das zweite Gewinde der Distanzschraube geschraubt ist, von dem tragenden Bauteil, in das das erste Gewinde geschraubt ist, wenn die Distanzschraube gedreht wird. Auf diese Weise lässt sich der Abstand des zu befestigenden Bauteils von dem tragenden Bauteil ändern. Eine Ausgestaltung der Erfindung sieht gleiche Gewindesteigungen des ersten und des zweiten Gewindes der Distanzschraube vor. Dadurch ändert sich der Abstand des zu befestigenden Bauteils vom tragenden Bauteil nicht durch Drehen der Distanzschraube.

Eine Ausgestaltung der Erfindung sieht vor, dass ein Gewindeaußendurchmesser des zweiten Gewindes von vorn nach hinten, das heißt aus Richtung des vorderen Endes in Richtung des hinteren Endes der Distanzschraube zunimmt. Der vorn kleinere Gewindeaußendurchmesser des zweiten Gewindes verkleinert das zum Einschrauben des zweiten Gewindes in das Durchgangsloch des zu befestigenden Bauteils notwendige Drehmoment. Der Gewindeaußendurchmesser muss nicht über die gesamte Länge des zweiten Gewindes zunehmen, es genügt, wenn der Gewindeaußendurchmesser in einem oder mehreren Längsabschnitten des zweiten Gewindes zunimmt. Längsabschnitt mit sich von vorn nach hinten verkleinerndem Gewindeaußendurchmesser schließt diese Ausgestaltung der Erfindung nicht aus.

Das zweite Gewinde weist bei Ausführungen der Erfindung eine Länge von 50 % bis 75 % einer Länge des zweiten Gewindekerns und des Einführabschnitts beziehungsweise der Kunststoffummantelung des Schraubenschafts auf.

Bei Ausführungen der Erfindung weisen hintere Gewindeflanken des zweiten Gewindes einen kleineren Flankenwinkel als vordere Gewindeflanken auf. Die hinteren Gewindeflanken sind die dem hinteren Ende der Distanzschraube zugewandten Gewindeflanken und die vorderen Gewindeflanken die dem vorderen Ende der Distanzschraube zugewandte Gewindeflanken des zweiten Gewindes der erfindungsgemäßen Distanzschraube. Als Flankenwinkel wird hier - anders als üblich - nicht ein Winkel zwischen der vorderen und der hinteren Gewindeflanke, sondern ein Winkel in einer Axialebene der Distanzschraube zwischen der jeweiligen Gewindeflanke und einer Senkrechten zur Längsachse der Distanzschraube beziehungsweise zu einer Radialebene der Längsachse der Distanzschraube, des zweiten Gewindekerns oder des zweiten Gewindes bezeichnet.

Bei einer bevorzugten Ausgestaltung der Erfindung, weist der zweite Gewindekern am hinteren Ende der Distanzschraube einen kreisförmigen Querschnitt auf, dessen Durchmesser so groß ist wie oder größer als ein Eckmass des Mehreckquerschnitts am hinteren Ende der Distanzschraube. Der Abschnitt des zweiten Gewindekerns mit dem kreisförmigen Querschnitt kann am hinteren Ende des zweiten Gewindes enden oder nach hinten überstehen. Er schließt ohne Spalt in dem Durchgangsloch in dem zu befestigenden Bauteil ab, sofern sein Durchmesser mindestens so groß wie der Durchmesser des Durchgangslochs ist.

Zwecks einer guten Drehmomentübertragung zum Einschrauben der Distanzschraube, sieht eine Ausgestaltung der Erfindung einen Werkzeugsitz zu einem durch Formschluss drehfesten Ansetzen, insbesondere zum Einstecken eines Schraubendrehers, Schraubenschlüssels oder eines anderen Drehantriebswerkzeugs an oder in dem hinteren Ende des Schraubenschafts vor. Solche Werkzeugsitze sind insbesondere ein Innensechskant oder ein Innenstern.

Eine Ausgestaltung der Erfindung sieht eine oder mehrere, in der Längsrichtung der Distanzschraube voneinander beabstandete Setztiefenmarkierungen im Einführabschnitt des zweiten Gewindes vor. Beispielsweise weist der Einführabschnitt zwei umlaufende Linien in der Längsrichtung beabstandeten Radialebene der Distanzschraube, Pfeilspitzen, Nasen oder dergleichen Markierungen auf. Zum Einschrauben der Distanzschraube wird der Einführabschnitt so tief in das Durchgangsloch des zu befestigenden Bauteils eingebracht, dass sich eine, dem tragenden Bauteil abgewandte Oberfläche des zu befestigenden Bauteils zwischen den beiden Setztiefenmarkierungen befindet. Damit ist ein richtiger Sitz der Distanzschraube beziehungsweise eine ausreichend tiefe Verankerung des ersten Gewindes in dem tragenden Bauteil sichergestellt, wenn die Distanzschraube so tief eingeschraubt wird, bis ihr hinteres Ende bündig mit oder versenkt unter der, dem tragenden Bauteil abgewandten Oberfläche des zu befestigenden Bauteils ist.

Als Setztiefenmarkierung sieht eine Ausgestaltung der Erfindung eine Vertiefung in dem Einführabschnitt des zweiten Gewindes vor, die sich in der Längsrichtung des Einführabschnitts erstreckt.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine perspektivische Darstellung einer Distanzschraube gemäß der Erfindung;
- Figur 2: eine vergrößerte Seitenansicht eines hinteren Längsbereichs der Distanzschraube aus Figur 1; und
- Figur 3: einen Achsschnitt des hinteren Längsbereichs der Distanzschraube aus Figur 1.

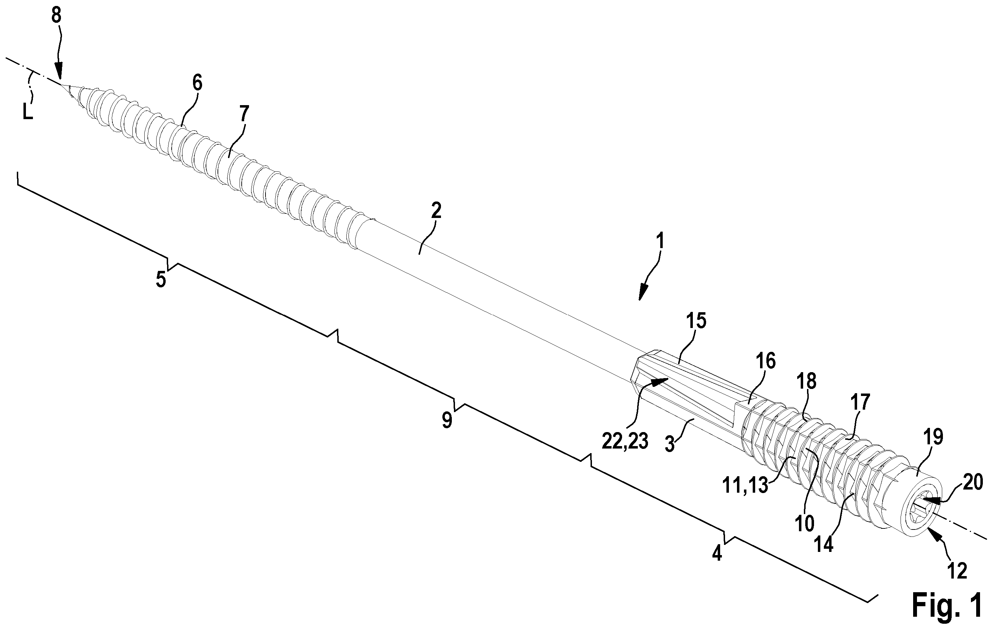

Die in Figur 1 dargestellte, erfindungsgemäße Distanzschraube 1 weist einen zylinderstiftförmigen Schraubenschaft 2 aus Stahl oder aus einem anderen Metall mit einer Kunststoffummantelung 3 in einem Längsbereich 4 des Schraubenschafts 2 auf. Der Längsbereich des Schraubenschafts 2 mit der Kunststoffummantelung 3 wird hier nachfolgend als hinterer Längsbereich 4 bezeichnet; er ist zugleich ein hinterer Längsbereich 4 der Distanzschraube 1. Der Schraubenschaft 2 muss nicht zwingend aus Metall sein, sondern kann auch aus einem anderen Werkstoff bestehen. Im Ausführungsbeispiel ist die Kunststoffummantelung 3 auf den Schraubenschaft 2 gespritzt, wobei die Erfindung andere Arten der Herstellung nicht ausschließt.

In einem vorderen, dem hinterer Längsbereich 4 fernen Längsbereich 5 weist der Schraubenschaft 2 ein erstes Gewinde 6 mit einem ersten Gewindekern 7 auf. Im Ausführungsbeispiel ist das erste Gewinde 6 als selbstschneidendes Holzschraubengewinde ausgebildet, wobei ein Holzschraubengewinde als erstes Gewinde 6 der erfindungsgemäßen Distanzschraube 1 bevorzugt aber nicht zwingend ist. Im Ausführungsbeispiel beginnt das erste Gewinde 6 an einem der Kunststoffummantelung 3 fernen Ende des Schraubenschafts 2 und erstreckt sich über den vorderen Längsbereich 5 in Richtung der Kunststoffummantelung 3 im hinteren Längsbereich 4 der Distanzschraube 1. Das Ende, an dem das erste Gewinde 6 beginnt, wird hier als vorderes Ende 8 des Schraubenschafts 2 bezeichnet und ist zugleich auch ein vorderes Ende 8 der erfindungsgemäßen Distanzschraube 1. Die Erfindung schließt Ausführungen der Distanzschraube 1 nicht aus, bei denen das erste Gewinde 6 nicht am vorderen Ende 8, sondern in einem Abstand in einer Längsrichtung der Distanzschraube 1 von dem vorderen Ende 8 der Distanzschraube 1 beginnt.

Zwischen dem vorderen Längsbereich 5 mit dem ersten Gewinde 6 und der Kunststoffummantelung 3 im hinteren Längsbereich der Distanzschraube 1, weist der Schraubenschaft 2 einen gewindelosen Bereich 9 auf, in dem der Schraubenschaft 2 im Ausführungsbeispiel glattwandig ist, was allerdings nicht zwingend für die Erfindung ist.

Die Kunststoffummantelung 3 weist ein zweites Gewinde 10 mit einem zweiten Gewindekern 11 auf, das zugleich auch ein zweites Gewinde 10 und ein zweiter Gewindekern 11 der Distanzschraube 1 ist. Das zweite Gewinde 10 erstreckt sich nicht über eine gesamte Länge der Kunststoffummantelung 3 und des hinteren Längsbereichs 4, sondern nur über etwa 50 % bis 75 %, im Ausführungsbeispiel über etwa 60 % einer Länge der Kunststoffummantelung 3 und des hinteren Längsbereichs 4. Wie das erste Gewinde 6 ist das zweite Gewinde 10 im Ausführungsbeispiel der erfindungsgemäßen Distanzschraube 1 ein selbstschneidendes Holzschraubengewinde, wobei ein Holzschraubengewinde als zweites Gewinde 10 ebenfalls bevorzugt aber nicht zwingend für die Erfindung ist.

Im Ausführungsbeispiel weist das zweite Gewinde 10 einen größeren Gewindeaußendurchmesser auf als das erste Gewinde 6. Der Außendurchmesser des zweiten Gewindes 10 vergrößert sich im Ausführungsbeispiel von vorn nach hinten, das heißt aus Richtung des vorderen Endes 8 in Richtung eines hinteren Endes 12 der Distanzschraube 1. Als hinteres Ende 12 wird hier das, dem vorderen Ende 8 ferne Ende der Distanzschraube 1 bezeichnet, an dem im Ausführungsbeispiel der hintere Längsbereich 4 und die Kunststoffummantelung 3 beginnen beziehungsweise enden.

Das erste und das zweite Gewinde 6, 10 weisen im Ausführungsbeispiel gleiche Gewindesteigungen auf, was allerdings nicht zwingend für die Erfindung ist.

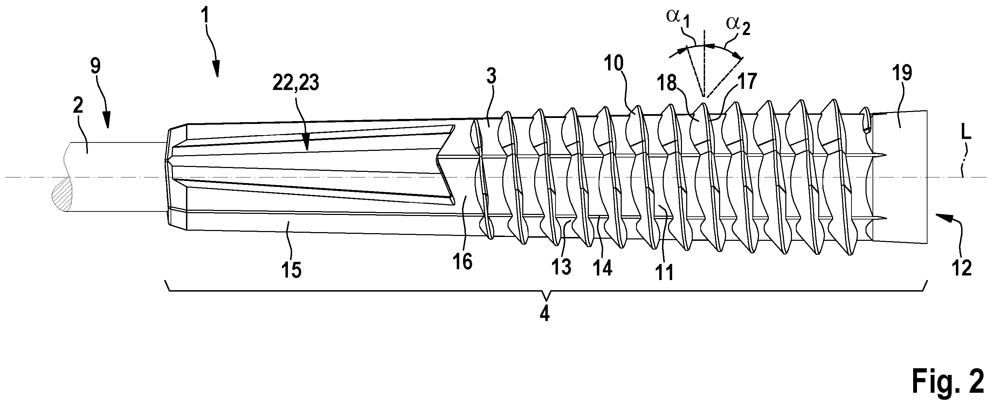

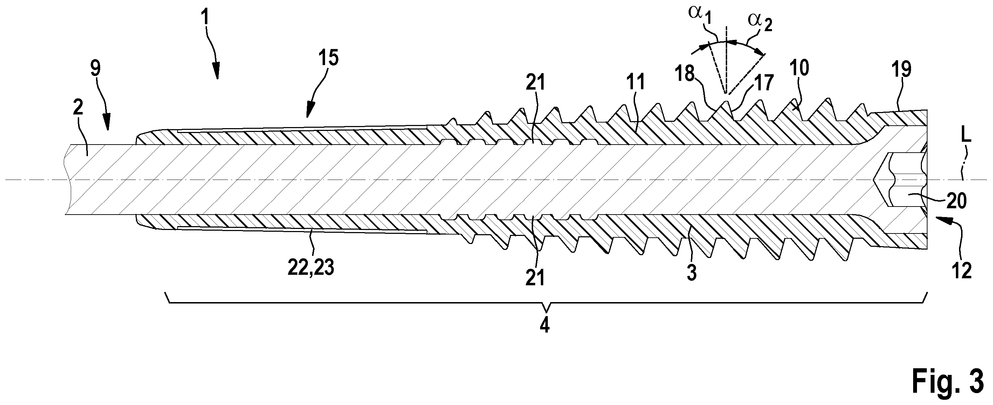

Hintere Gewindeflanken 17 des zweiten Gewindes 10 sind steiler, das heißt, sie weisen einen spitzeren Flankenwinkel α₁ auf als vordere Gewindeflanken 18 des zweiten Gewindes 10, deren Flankenwinkel in der Zeichnung mit α₂ bezeichnet sind (Figuren 2 und 3). Die hintere Gewindeflanke 17 ist die, dem hinteren Ende 12 und die vordere Gewindeflanke 18 die, dem vorderen Ende 8 der Distanzschraube 1 zugewandte Gewindeflanke 17, 18 des zweiten Gewindes 10. Anders als üblich wird hier als Flankenwinkel α nicht der Winkel zwischen der vorderen und der hinteren Gewindeflanke 17, 18 sondern der Winkel der hinteren beziehungsweise der vorderen Gewindeflanke 17, 18 zu einer Senkrechten einer Längsachse L der Distanzschraube 1 beziehungsweise zu einer Radialebene der Längsachse L in einer Axialebene der Längsachse L bezeichnet.

Der zweite Gewindekern 11 des zweiten Gewindes 10 der erfindungsgemäßen Distanzschraube 1 weist einen Mehreckquerschnitt 13 auf. Im Ausführungsbeispiel weist der zweite Gewindekern 11 einen Sechseckquerschnitt auf, wobei auch Querschnitte mit weniger oder mehr Ecken möglich sind. Insbesondere weist der zweite Gewindekern 10 einen - vorzugsweise regelmäßigen - Mehrkant, im Ausführungsbeispiel einen Sechskant, oder die Form eines - vorzugsweise regelmäßigen - Pyramidenstumpfs mit - im Ausführungsbeispiel sechseckigem Querschnitt - auf. Abweichend von einem Pyramidenstumpf können Längskanten 14 des zweiten Gewindekerns 11 nicht gerade, sondern beispielsweise nach innen und/oder nach außen gebogen oder abgewinkelt verlaufen. Ebenfalls abweichend von einem Pyramidenstumpf können Seitenflächen des zweiten Gewindekerns 11 nicht eben sondern beispielsweise nach innen oder außen gewölbt sein. Ecken des Mehreckquerschnitts 13 des zweiten Gewindekerns 11 bilden über eine Länge des zweiten Gewindekerns 11 die Längskanten 14 des zweiten Gewindekerns 11.

Durch seinen Mehreckquerschnitt 13 weist der zweite Gewindekern 11 weniger Reibung in einem Loch auf, in das das zweite Gewinde 10 geschraubt wird, als ein Gewindekern mit kreisförmigem Querschnitt, weil der zweite Gewindekern 11 mit seinem Mehreckquerschnitt 13 nur mit seinen Längskanten 14 und nicht wie ein Gewindekern mit kreisförmigem Querschnitt über seinen gesamten Umfang an einer Lochwand des Lochs anliegt. Dadurch weist das zweite Gewinde 10 der erfindungsgemäßen Distanzschraube 1, dessen zweiter Gewindekern 11 den Mehreckquerschnitt 13 aufweist, ein kleineres Einschraubmoment in ein Loch auf, als ein Gewinde, dessen Gewindekern einen kreisförmigen Querschnitt aufweist.

Der zweite Gewindekern 11 steht nach vorn, das heißt in Richtung des vorderen Endes 8 der Distanzschraube 1, über das zweite Gewinde 10 über und bildet vor dem zweiten Gewinde 10, also vom zweiten Gewinde 10 in Richtung des vorderen Endes 8 der Distanzschraube 1, einen Einführabschnitt 15 für das zweite Gewinde 10. Es geht sozusagen der zweite Gewindekern 11 nach vorn in den Einführabschnitt 15 oder umgekehrt der Einführabschnitt 15 nach hinten in den zweiten Gewindekern 11 über.

Der Einführabschnitt 15 weist im dargestellten und beschriebenen Ausführungsbeispiel der Erfindung ebenfalls einen Mehreckquerschnitt 16 auf, und zwar vorzugsweise mit gleich vielen Ecken wie der zweite Gewindekern 11. Im Ausführungsbeispiel setzt sich der Mehreckquerschnitt 16 des Einführabschnitts 15 in den Mehreckabschnitt 13 des zweiten Gewindekerns 11 fort.

Im Ausführungsbeispiel vergrößern sich die Mehreckabschnitte 13, 16 des Einführabschnitts 15 und des zweiten Gewindekerns 11 von vorn nach hinten, das heißt aus Richtung des vorderen Endes 8 in Richtung des hinteren Endes 12 der Distanzschraube 1. Das heißt, ein radialer Abstand der Längskanten 14 des Einführabschnitts 15 und des zweiten Gewindekerns 11 von der Längsachse L der Distanzschraube 1 beziehungsweise des Schraubenschafts 2 beziehungsweise des Einführabschnitts 15 und des zweiten Gewindekerns 11 vergrößert sich von vorn nach hinten.

Der Pyramidenstumpf des Einführabschnitts 15 und zweiten Gewindekerns 11 weist im Ausführungsbeispiel einen sehr spitzen Pyramidenwinkel auf, ein radialer Abstand der Längskanten 14 des Pyramidenstumpfs von der Längsachse L der Distanzschraube 1 vergrößert sich von vorn nach hinten um nicht mehr als 1 bis 2 mm und im Ausführungsbeispiel nur um wenige 1/10 mm.

Von einem hinteren Ende 12 der Distanzschraube 1 weist das zweite Gewinde 10 einen kurzen Abstand auf, der im Ausführungsbeispiel etwa so groß wie ein Radius des Schraubenschafts 2 ist. Der zweite Gewindekern 11 steht bis zum hinteren Ende 12 der Distanzschraube 1 über das zweite Gewinde 10 über. In einem hinteren Abschnitt 19 zwischen dem zweiten Gewinde 10 und dem hinteren Ende 12 der Distanzschraube 1 weist der zweite Gewindekern 11 einen kreisförmigen Querschnitt auf, ist also beispielsweise zylinderförmig. Im Ausführungsbeispiel ist der zweite Gewindekern 11 in dem hinteren Abschnitt 19 hinter dem zweiten Gewinde 10 kegelstumpfförmig und erweitert sich in Richtung des hinteren Endes 12 der Distanzschraube 1 mit einem sehr spitzen Kegelwinkel. In dem hinteren Abschnitt 19 vergrößert sich ein Durchmesser des zweiten Gewindekerns 11 von einem Eckmass des zweiten Gewindekerns 11 an einem hinteren Ende des zweiten Gewindes 10 und ist am hinteren Ende 12 der Distanzschraube 1 größer als ein größtes Eckmass des zweiten Gewindekern 11, damit die Kunststoffummantelung 3 am hinteren Ende 12 an einer Lochwand eines Lochs anliegt, in die das zweite Gewinde 10 der Distanzschraube 1 geschraubt ist oder wird.

Der Schraubenschaft 2 geht bis zum hinteren Ende 12 der Distanzschraube 1 durch und weist am hinteren Ende 12 einen Werkzeugsitz 20 zu einem, durch Formschluss drehfesten Ansetzen eines Drehantriebswerkzeugs, wie beispielsweise eines Schraubenschlüssels, zu einem Drehantrieb der Distanzschraube 1 auf. Im Ausführungsbeispiel weist der Schraubenschaft 2 in seinem hinteren Ende einen Innenstern oder einen Innensechskant als Werkzeugsitz 20 zum Einstecken eines Sternschlüssels oder eines Sechskantschlüssels auf.

Innerhalb der Kunststoffummantelung 3 weist der Schraubenschaft 2 Längsrippen 21 auf (Figur 3), die in die Kunststoffummantelung 3 vorstehen und dadurch eine, durch Formschluss drehfeste Verbindung zwischen dem Schraubenschaft 2 und der Kunststoffummantelung 3 bewirken. Andere Arten einer Formschlussverbindung gegen Drehen zwischen dem Schraubenschaft 2 und der Kunststoffummantelung 3 wie beispielsweise einen Mehrkant, ein Sternprofil oder ein Vielzahnprofil sind möglich.

Der Einführabschnitt 15 der Kunststoffummantelung 3 weist eine Setztiefenmarkierung 22 für die Montage der Distanzschraube 1 auf. Im Ausführungsbeispiel weist der Einführabschnitt 15 zwei in Ansicht pfeilspitzenförmige, längliche Vertiefungen 23 an gegenüberliegenden Stellen des Einführabschnitts 15 als Setztiefenmarkierung 22 auf. Die die Setztiefenmarkierung 22 bildenden Vertiefungen 23 reichen von kurz hinter einem vorderen Ende 8 des Einführabschnitts 15 bis kurz vor das zweite Gewinde 10. Möglich sind stattdessen beispielsweise umlaufende Markierungen oder kleine Pfeilspitzen an verschiedenen Umfangsstellen am vorderen und am hinteren Ende 8, 12 der Vertiefungen 23 als Setztiefenmarkierung 22 (nicht dargestellt).

Die erfindungsgemäße Distanzschraube 1 ist für eine Abstandsbefestigung eines zu befestigenden Bauteils an einem tragenden Bauteil vorgesehen, wobei die Erfindung andere Verwendungen nicht ausschließt. Das zu befestigende Bauteil kann beispielsweise ein Rahmen eines Fensters oder eine Fassadenplatte und das tragende Bauteil eine Gebäudewand sein. Zur Abstandsbefestigung wird ein Durchgangsloch mit dem Eckmass des zweiten Gewindekerns 11 als Durchmesser durch das zu befestigende Bauteil und mit dem Durchgangsloch fluchtend ein Sackloch in das tragende Bauteil gebohrt. In das Sackloch wird beispielsweise ein Spreizdübel gesteckt.

Anschließend wird die erfindungsgemäße Distanzschraube 1 mit ihrem vorderen Ende 8 voraus durch das Sackloch im zu befestigenden Bauteil in das Sackloch im tragenden Bauteil eingebracht, und zwar so tief, dass sich eine, dem tragenden Bauteil abgewandte Seite des zu befestigenden Bauteils zwischen dem vorderen und dem hinteren Ende der Setztiefenmarkierung 22 befindet.

Danach wird das zu befestigende Bauteil in einen gewünschten Abstand vom tragenden Bauteil gebracht und danach die Distanzschraube 1 drehend angetrieben und dadurch eingeschraubt. Dabei schraubt sich das erste Gewinde 6 in den Spreizdübel im Sackloch im tragenden Bauteil ein und spreizt den Spreizdübel auf derart, dass die Distanzschraube 1 mittels des Spreizdübels starr im tragenden Bauteil verankert ist. Außerdem schraubt sich das zweite Gewinde 10 in das Sackloch im zu befestigenden Bauteil ein und hält das zu befestigende Bauteil in dem zuvor eingestellten Abstand von dem tragenden Bauteil.

Weil das erste und das zweite Gewinde 6, 10 der Distanzschraube 1 gleiche Gewindesteigungen aufweisen, ändert sich der Abstand des zu befestigenden Bauteils vom tragenden Bauteil nicht bei der Drehung der Distanzschraube 1. Hätten die beiden Gewinde 6, 10 verschiedene und/oder entgegengerichtete Gewindesteigungen, was bei Ausführungen der Erfindung möglich ist, würde sich der Abstand des zu befestigenden Bauteils vom tragenden Bauteil bei der Drehung der Distanzschraube 1 ändern und der Abstand des zu befestigenden Bauteils vom tragenden Bauteil ließe sich durch Drehen der Distanzschraube 1 einstellen.

### Bezugszeichenliste

### Schraube, insbesondere Distanzschraube

- α₁, α₂: Flankenwinkel
- L: Längsachse
- 1: Distanzschraube
- 2: Schraubenschaft
- 3: Kunststoffummantelung
- 4: hinterer Längsbereich
- 5: vorderer Längsbereich
- 6: erstes Gewinde
- 7: erster Gewindekern
- 8: vorderes Ende
- 9: gewindeloser Bereich
- 10: zweites Gewinde
- 11: zweiter Gewindekern
- 12: hinteres Ende
- 13: Mehreckquerschnitt des zweiten Gewindekerns
- 14: Längskante
- 15: Einführabschnitt
- 16: Mehreckabschnitt des Einführabschnitts
- 17: hintere Gewindeflanke
- 18: vordere Gewindeflanke
- 19: hinterer Abschnitt
- 20: Werkzeugsitz
- 21: Längsrippe
- 22: Setztiefenmarkierung
- 23: Vertiefung

## Patentansprüche

1. Schraube, insbesondere Distanzschraube (1), mit einem ersten Gewinde (6), das einen ersten Gewindekern (7) aufweist, in einem vorderen Längsbereich (5) der Schraube (1), und mit einem zweiten Gewinde (10), das einen zweiten Gewindekern (11) aufweist, in einem, dem vorderen Längsbereich (5) fernen hinteren Längsbereich (4) der Schraube (1), wobei das erste Gewinde (6) insbesondere beabstandet ist von dem zweiten Gewinde (10), **dadurch gekennzeichnet, dass** der zweite Gewindekern (11) des zweiten Gewindes (10) einen Mehreckquerschnitt (13) aufweist.

2. Schraube, insbesondere Distanzschraube (1) nach Anspruch 1, **dadurch gekennzeichnet, dass** die Schraube (1) einen Schraubenschaft (2) mit dem ersten Gewinde (6) in einem vorderen Längsbereich (5) des Schraubenschafts (2) aufweist, und mit einer Kunststoffummantelung (3) in einem, dem vorderen Längsbereich (5) fernen hinteren Längsbereich (4) des Schraubenschafts (2), die das zweite Gewinde (10) und den zweiten Gewindekern (11) aufweist.

3. Schraube, insbesondere Distanzschraube (1) nach Anspruch 1 oder 2, **dadurch gekennzeichnet, dass** der zweite Gewindekern (11) als Einführabschnitt (15) für das zweite Gewinde (10) in Richtung des vorderen Endes (8) der Schraube (1) über das zweite Gewinde (10) übersteht und dass der Einführabschnitt (15) ebenfalls einen Mehreckquerschnitt (13) aufweist.

4. Schraube, insbesondere Distanzschraube (1) nach einem oder mehreren der Ansprüche 1 bis 3, **dadurch gekennzeichnet, dass** sich der Mehreckquerschnitt (13, 16) des Einführabschnitts (15) und/oder des zweiten Gewindekerns (11) von vorn in Richtung des hinteren Endes (12) vergrößert.

5. Schraube, insbesondere Distanzschraube (1) nach einem oder mehreren der Ansprüche 2 bis 4, **dadurch gekennzeichnet, dass** die Kunststoffummantelung (3) und der Schraubenschaft (2) eine Formschlussverbindung aufweisen, die die Kunststoffummantelung (3) durch einen Formschluss mit dem Schraubenschaft (2) drehfest mit dem Schraubenschaft (2) verbindet.

6. Schraube, insbesondere Distanzschraube (1) nach einem oder mehreren der vorhergehenden Ansprüche, **dadurch gekennzeichnet, dass** das erste Gewinde (6) und das zweite Gewinde (10) eine gleiche Gewindesteigung aufweisen.

7. Schraube, insbesondere Distanzschraube (1) nach einem oder mehreren der vorhergehenden Ansprüche, **dadurch gekennzeichnet, dass** ein Gewindeaußendurchmesser des zweiten Gewindes (10) von vorn in Richtung des hinteren Endes (12) zunimmt.

8. Schraube, insbesondere Distanzschraube (1) nach einem oder mehreren der Ansprüche 3 bis 7, **dadurch gekennzeichnet, dass** das zweite Gewinde (10) eine Länge von 50 % bis 75 % einer Länge des zweiten Gewindekerns (11) einschließlich des Einführabschnitts (15) aufweist.

9. Schraube, insbesondere Distanzschraube (1) nach einem oder mehreren der vorhergehenden Ansprüche, **dadurch gekennzeichnet, dass** dem hinteren Ende (12) zugewandte hintere Gewindeflanken (17) des zweiten Gewindes (10) einen kleineren Flankenwinkel (α₁) aufweisen als dem vorderen Ende (8) zugewandte vordere Gewindeflanken (18) des zweiten Gewindes (10).

10. Schraube, insbesondere Distanzschraube (1) nach einem oder mehreren der vorhergehenden Ansprüche, **dadurch gekennzeichnet, dass** der zweite Gewindekern (11) einen hinteren Abschnitt (19) mit einem kreisförmigen Querschnitt am hinteren Ende (12) aufweist, dessen Durchmesser so groß wie oder größer als ein Eckmass des zweiten Gewindekerns (11) am hinteren Ende (12) ist.

11. Schraube, insbesondere Distanzschraube (1) nach einem oder mehreren der Ansprüche 2 bis 10, **dadurch gekennzeichnet, dass** der Schraubenschaft (2) einen Werkzeugsitz (20) zu einem, durch Formschluss drehfesten Ansetzen, insbesondere zum Einstecken, eines Drehantriebswerkzeugs zu einem Drehantrieb der Distanzschraube (1) an seinem hinteren Ende (12) aufweist.

12. Schraube, insbesondere Distanzschraube (1) nach einem oder mehreren der Ansprüche 3 bis 11, **dadurch gekennzeichnet, dass** der Einführabschnitt (15) mindestens eine Setztiefenmarkierung (22) aufweist.

13. Schraube, insbesondere Distanzschraube (1) nach Anspruch 12, **dadurch gekennzeichnet, dass** der Einführabschnitt (15) eine, sich in einer Längsrichtung erstreckende Vertiefung (23) als Setztiefenmarkierung (22) aufweist.
